# EUROPÄISCHE PATENTSCHRIFT

(11) **EP 1 280 946 B1**
(45) Veröffentlichungstag und Bekanntmachung des Hinweises auf die Patenterteilung: **18.08.2004**
(21) Anmeldenummer: 01938127.6
(22) Anmeldetag: 18.04.2001
(51) Int. Cl.: D01F 2/00, D01D 5/06, D01D 10/04, B29C 43/22, B29C 47/00, B29C 55/00, B29D 7/01

(54) **VERFAHREN UND VORRICHTUNG ZUR ZUGSPANNUNGSFREIEN FÖRDERUNG VON ENDLOSFORMKÖRPERN**
METHOD AND DEVICE FOR CONVEYING CONTINUOUS SHAPED BODIES WITHOUT TENSILE STRESS
PROCEDE ET DISPOSITIF POUR ACHEMINER SANS TRACTION DES CORPS MOULES CONTINUS

(30) Priorität: 12.05.2000 DE 10023391
(43) Veröffentlichungstag der Anmeldung: 05.02.2003
(73) Patentinhaber: Zimmer Aktiengesellschaft, 60388 Frankfurt am Main (DE)
(72) Erfinder: ZIKELI, Stefan, A-4844 Regau (AT); ECKER, Friedrich, A-4850 Timelkam (AT)
(74) Vertreter: Grünecker, Kinkeldey, Stockmair & Schwanhäusser Anwaltssozietät
(86) Internationale Anmeldenummer: PCT/EP2001/004416
(87) Internationale Veröffentlichungsnummer: WO 2001/086041

(56) Entgegenhaltungen:
- EP-A- 0 853 146
- DE-A- 10 025 230
- DE-A- 10 025 231

## Beschreibung

Die Erfindung betrifft ein Verfahren zum Herstellen cellulosischer Endlosformkörper, wie Filamente, Stapelfasern, Membranen und Folien, bei dem eine Extrusionslösung enthaltend Wasser, Cellulose und tertiäres Aminoxid zu mindestens einem Endlosformkörper extrudiert und dann der Endlosformkörper verstreckt wird, anschließend der Endlosformkörper auf einer Fördereinrichtung aufgenommen und von der Fördereinrichtung durch ein Abzugswerk abgezogen wird.

Die Erfindung betrifft des Weiteren eine Vorrichtung zur Herstellung cellulosischer Endlosformkörper, wie Filamente, Stapelfasern, Membranen und Folien, aus einer Extrusionslösung aus Cellulose, Wasser und tertiärem Aminoxid, mit mindestens einer Extrusionsdüsenöffnung, die von der Extrusionslösung durchströmt ist und stromab der die Extrusionslösung zu einem Endlosformkörper extrudiert ist, und mit einem Abzugswerk, durch das eine Zugspannung auf den Endloskörper aufbringbar und der Endlosformkörper aus der Vorrichtung abziehbar ist.

Im Stand der Technik werden die Abmessungen der extrudierten Endlosformkörper nach der Koagulation und der Stabilisierung durch das Aufbringen einer Zugspannung eingestellt. Die Zugspannung wird durch das Abzugswerk erzeugt, das den Endlosformkörper aufgreift, abzieht und weiteren Verfahrensschritten zuführt.

So wird bei dem Verfahren und der Vorrichtung, die in der WO 93/19230 gezeigt sind, ein Verbund aus einer Vielzahl von Endlosformkörpem in Form von Spinnfäden nach dem Austritt aus einer Spinndüsenfläche über eine Ablenkrolle zusammengefasst und abgezogen. Die Ablenkrolle ist dabei in einem Fällbad angeordnet.

Durch die starke Umlenkung der Endlosformkörper an der Ablenkrolle im Koagulationsbad werden die Fäden mechanisch stark belastet. Dies führt zu Beeinträchtigungen der Faserqualität, so dass durch das Verfahren und die Vorrichtung der WO 93/19230 Fasern erzeugt werden, die zur Sprödigkeit, Fibrillierung und zum Filamentbruch neigen.

Durch die Umlenkung innerhalb des Koagulationsbades sind der Vorrichtung und dem Verfahren der WO 93/19230 aufgrund der Viskosität des Koagulationsbades Grenzen hinsichtlich der Geschwindigkeit des Spinnfades im Koagulationsbad gesetzt.

Um dieses Problem zu vermeiden, wird bei dem Verfahren und der Vorrichtung der WO 96/30566 der Endlosformkörper durch einen Koagulationsflüssigkeitsfilm geleitet. Um die Koagulationsflüssigkeit aus dem Endlosformkörper zu entfernen, wird dieser um einen Winkel zwischen 45° und 60° am unteren Ende des Überlaufs plötzlich umgelenkt. Dadurch strömt die Koagulationsflüssigkeit weiter.

Auch bei dem Verfahren und der Vorrichtung der WO 96/30566 wirkt auf den Endlosformkörper bereits ab der Extrusionsdüsenöffnung eine Zugspannung verursacht durch das mechanische Faserabzugsorgan.

Durch die hohe mechanische Belastung aufgrund der Zugspannung und der plötzlichen Umlenkung weisen die durch das Verfahren und die Vorrichtung der WO 96/30566 erhaltenen Fasern schlechte textile Eigenschaften auf. Insbesondere lassen die Fibrillierungsneigung, die Schlingenfestigkeit und das Kräuselungsverhalten zu wünschen übrig.

Bei dem Verfahren und der Vorrichtung der EP 0 617 150 A1 werden Viskose-Spinnfilamente in Form eines kontinuierlichen Kabels mittels Walzen abgezogen, über mehrere Rollen umgelenkt und dann auf einen Bandförderer zur Bildung eines Spinnvlieses geleitet. Bei diesem Verfahren wird bewußt die Bildung eines Gewebes angestrebt. Für die Erzeugung von Stapelfasern ist dieses System aufgrund der sich bildenden Wirrlagen und aufgrund der Verhakung der Filamente nicht geeignet.

Auch bei diesem Verfahren werden Fasern erzeugt, die nur mäßig gute Fasereigenschaften aufweisen.

In der EP 0 853 146 A2 ist ein Verfahren zur Herstellung von cellulosischen Fasern beschrieben, bei denen eine Fällung der Cellulose in zwei Stufen erfolgt. In der ersten Stellungsstufe werden die Fasern durch ein Fällbad geleitet, wobei lediglich die Klebrigkeit der Oberfläche der zu Fasern geformten Lösung unterbunden wird. Aus der ersten Fällstufe werden die Fasern durch eine Galette abgezogen und in weiteren Fällungsstufen in einem spannungslosen Zustand gehalten, so dass sie beim Verlassen der letzten Fällungsstufe durchkoaguliert sind.

Die Erfindung liegt in Anbetracht der Nachteile des Standes der Technik daher die Aufgabe zugrunde, ein Verfahren und eine Vorrichtung zu schaffen, durch welche die textilen Eigenschaften von Endlosformkörpern wie Stapelfasern und Filamenten verbessert werden können. Des Weiteren liegt dem Verfahren und der Vorrichtung die Aufgabe zugrunde, dass die Fibrillierungsneigung der Fasern gesenkt und die Schlingenfestigkeit erhöht wird.

Dieses Ziel wird für das eingangs genannte Verfahren erfindungsgemäß dadurch erreicht, dass der Endlosformkörper nach der Formgebung auf einer Fördereinrichtung aufgenommen wird und auf der Fördereinrichtung im Wesentlichen zugspannungsfrei zu dem Abzugswerk gefördert wird und dass der Endlosformkörper durch eine Fluidströmung in Extrusionsrichtung umströmt und verstreckt wird.

Bei der Vorrichtung wird die Aufgabe erfindungsgemäß dadurch gelöst, dass zwischen der Extrusionsdüsenöffnung und dem Abzugswerk eine Fördereinrichtung vorgesehen ist, durch die der Endlosformkörper im Wesentlichen zugspannungsfrei zur Abzugsvorrichtung förderbar ist, und dass der Endlosformkörper durch eine Fluidströmung in Extrusionsrichtung umströmt und verstreckt ist.

Erfindungsgemäß wird also der Endlosformkörper in einem Bereich im Wesentlichen zugspannungsfrei gefördert, in dem er sich verfestigt und stabilisiert bzw. relaxieren kann. Überraschenderweise hat sich herausgestellt, dass die textilen Eigenschaften des Endlosformkörpers sich durch ein derart geführtes Verfahren und Vorrichtung erheblich verbessern, wenn gerade in dem kritischen Bereich nach der Formgebung keine mechanisch aufgebrachten Zugspannungen auf den Endlosformkörper wirken.

Da in dem Bereich der Fördereinrichtung der extrudierte Endlosformkörper koaguliert und sich stabilisiert, haben Spannungen, die auf den Endlosformkörper einwirken, besonders starken Einfluss auf die mechanischen Eigenschaften des Endlosformkörpers. Dieser Einfluss wird erfindungsgemäß minimiert.

Die erfindungsgemäße Vorrichtung und das erfindungsgemäße Verfahren können sowohl zur Herstellung von Folien, Filamentverbunden, Membranen als auch zur Herstellung von Stapelfasern eingesetzt werden. Bei der Anwendung der Erfindung in der Spinntechnik ist der Endlosformkörper ein Spinnfaden und die Extrusionsdüsenöffnung ist eine Spinndüsenöffnung.

Bei dem erfindungsgemäßen Verfahren und der erfindungsgemäßen Vorrichtung werden üblicherweise eine Vielzahl von Endlosformkörpern gleichzeitig verarbeitet. Da alle Endlosformkörper auf die gleiche Weise parallel verarbeitet werden, werden Verfahren und Vorrichtung der Einfachheit halber exemplarisch nur mittels einem Endlosformkörper dargestellt. Es ist ausdrücklich vorgesehen, dass eine Vielzahl von Endfosformkörpern gleichzeitig die selben Verfahrensschritte durchläuft und durch die Vorrichtung bearbeitet wird.

Zwar sind Fördereinrichtungen im Bereich der Spinntechnik bekannt, die im Wesentlichen zugspannungsfrei fördern. Doch sind diese Fördereinrichtungen nicht geeignet, die textilen Eigenschaften der auf ihnen transportierten Extrudate zu verbessern.

So ist in der DE 29 50 015 ein Schwingförderer gezeigt, der einen Faserkuchen durch einen Waschapparat fördert. Allerdings ist dieser Schwingapparat in Extrusionsrichtung des Endlosformkörpers hinter einem Abzugswerk 17 angeordnet. Somit ist auch aus der DE 29 50 014 A1 der Endlosformkörper unter mechanisch aufgebrachter Zugspannung direkt aus der Extrusionsdüse abgezogen. Wie oben erläutert, wirkt sich dies nachteilig auf die textilen Eigenschaften des Endlosformkörpers aus.

In dem Bereich, in dem der Schwingförderer der DE 29 50 014 A1 angeordnet ist, lassen sich die textilen Eigenschaften des Endlosformkörpers nicht mehr beeinflussen. Der darin beschriebene Schwingförderer wird lediglich zum Auswaschen der Fasern verwendet.

In der WO 98/07911 ist eine Vorrichtung und ein Verfahren beschrieben, mit dem Vliese hergestellt werden. Dazu werden an einer Extrusionsdüse in Form einer Spinndüse die extrudierten Spinnfäden durch starke Luftströmungen unmittelbar nach Austritt verzogen und zerkleinert. Diese kurzen Fasern fallen dann in Wirrlage auf einen Riemenförderer, auf dem sie zu einer Vliesmatte koagulieren.

Das Verfahren und die Vorrichtung der WO 98/07911 sind mit dem erfindungsgemäßen Verfahren und der erfindungsgemäßen Vorrichtung nicht vergleichbar, da keine Endlosformkörper gebildet werden können. Außerdem ist das Verfahren und die Vorrichtung, wie sie in der WO 98/07911 beschrieben sind, nicht für die Herstellung von gleichmäßigen Fasereigenschaften geeignet. Dies äußert sich in sehr starken Titerschwankungen und in ungleichmäßigen Werten der Zug- bzw. Schlingenfestigkeiten. Bedingt durch die Wirrlage der einzelne Filamente und der notwendigen Überführung zu Stapelfasern durch Schneiden der Endlosfilamente sind keine einheitlichen Schnittlängen erreichbar- es kommt zu einer starken Streuung der Schnittlänge.

Die vorliegende Erfindung hat zum Ziel, die mechanischen Eigenschaften eines jeden einzelnen Formkörpers zu verbessern. Der Endlosformkörper wird erfindungsgemäß während seines Transports zum Abzugswerk nicht zerkleinert. Die mechanischen Eigenschaften der Vliesmatte der WO 98/007911 dagegen werden im wesentlichen durch die Art der Wirrlage beeinflusst und nicht durch die Eigenschaften der einzelnen, zerkleinerten Fäden.

Ein zugspannungsfreies Fördern des Endlosformkörpers auf der Fördereinrichtung ist besonders vorteilhaft dann möglich, wenn in einer weiteren Ausgestaltung des Verfahrens oder der Vorrichtung der Endlosformkörper auf der Fördereinrichtung mit einer Fördergeschwindigkeit, die kleiner als die Extrusionsgeschwindigkeit des Endlosformkörpers ist, gefördert wird. Durch die geringere Fördergeschwindigkeit ist gewährleistet, dass keinerlei Zug auf den Endlosformkörper ausgeübt wird. Folglich kann der Endlosformkörper während der Förderung relaxieren und nach der Relaxation von einem Abzugswerk aufgenommen werden und einer Schneidmaschine zugeführt werden.

Dabei kann in einer weiteren vorteilhaften Ausgestaltung des Verfahrens oder der Vorrichtung der Endlosformkörper durch das Abzugswerk mit einer Abzugsgeschwindigkeit abgezogen werden, die im Wesentlichen der Extrusionsgeschwindigkeit des Endlosformkörpers entspricht. Die Fördereinrichtung bildet bei dieser Ausgestaltung somit eine Art zwischenliegende Pufferzone, in der der extrudierte Endlosformkörper spannungsfrei transportiert wird. Durch die hohe Abziehgeschwindigkeit des Abzugswerks ist sichergestellt, dass der Pufferbereich nicht überläuft und die Bearbeitungsgeschwindigkeit der weiteren Bearbeitungsschritte hinter der Abzugsvorrichtung der Extrusionsgeschwindigkeit entspricht.

Besonders vorteilhaft ist es auch, wenn der Endlosformkörper auf der Fördereinrichtung mittels hin- und hergehender Bewegung der Fördereinrichtung vorzugsweise quer zur Förderrichtung gefördert wird. Insbesondere kann die Fördereinrichtung als Schüttel-, Schwing- oder Vibrationsförderer ausgebildet sein.

Durch die hin- und hergehende Bewegung der Fördereinrichtung ist es in einer weiteren Ausgestaltung möglich, diese zur Förderung des Endlosformkörpers nötige Bewegung gleichzeitig zu einer geometrisch geordneten Ablage des Endlosformkörpers in Form eines Endlosformkörperkuchens auf der Fördereinrichtung zu nutzen: Der Endlosformkörper trifft auf die sich bewegende Fördereinrichtung auf und wird aufgrund der Relativbewegung zwischen Endlosformkörper und Fördereinrichtung automatisch wellenförmig bzw. breitflächig aufgelegt, sodass der Formkörper gut relaxieren kann. Zudem ermöglicht die Förderung der Endlosformkörper im spannungsfreien und gequollenen Zustand die optimale Ausbildung der Faserkräuselung, die ein wesentliches Kriterium bei der Weiterverarbeitung insbesondere von Stapelfasern darstellt.

Um die Fördergeschwindigkeit der Fördereinrichtung an die Extrusionsgeschwindigkeit und/oder die Abzugsgeschwindigkeit und/oder an verschiedene Betriebsparameter, wie Endlosformkörperbeschaffenheit und -abmessungen anzupassen, kann in einer weiteren vorteilhaften Ausgestaltung eine Steuereinrichtung vorgesehen sein, die auf die Fördereinrichtung einwirkt und durch die der Hub und/oder die Frequenz der Bewegung der Fördereinrichtung bzw. Ablegeeinrichtung einstellbar sind. Dabei können auch Sensoren vorgesehen sein, die die Extrusionsgeschwindigkeit, die Abzugsgeschwindigkeit, die Beschaffenheit und/oder Abmessungen des Endlosformkörpers überwachen und den Aufbau eines Regelkreises zur Steuerung der Fördereinrichtung ermöglichen.

Besonderes Augenmerk muss bei der Stapelfaser- und Filamentherstellung auf die gleichmäßige Ablage der Endlosformkörper nach dem Spinnprozess gerichtet werden, damit es zu keinen Verschlaufungen der Einzelfilamente kommt. Dies ist insbesondere bei der Produktion von Stapelfasern notwendig, um eine gute und gleichmäßige Schnittlängenverteilung zu erhalten. Um das Ablegen des Endlosformkörpers auf einer Transportfläche der Fördereinrichtung zu vergleichmäßigen, kann ein zumindest abschnittsweise stationäres oder sich mit der Fördereinrichtung mitbewegendes Leitmittel vorgesehen sein, auf das der Endlosformkörper auftrifft, und dadurch auf die bewegliche Fördereinrichtung geleitet wird. Der Endlosformkörper kann durch das Leitmittel sicher aufgefangen und kontrolliert auf die Fördereinrichtung geleitet werden. Durch eine Relativbewegung zwischen Leitmittel und Fördereinrichtung findet in Förderrichtung hinter dem Leitmittel ein geordnetes Ablegen des Endlosformkörpers als vorzugsweise gestapelter, geschichteter oder gefalteter Endlosformkörperkuchen statt.

Insbesondere aufgrund der breitflächigen bzw. welligen Ablage des Endlosformkörpers auf der Fördereinrichtung ist es möglich, die Fördergeschwindigkeit der Fördereinrichtung gegenüber der Extrusionsgeschwindigkeit und der Abzugsvorrichtung zu senken.

In einer weiteren Ausgestaltung wird der Endlosformkörper vom Leitmittel durch ein Flüssigkeitsbad, beispielsweise durch ein Koagulationsbad, transportiert, der in Förderrichtung fließt. Dadurch wird die Reibung zwischen dem Leitmittel und dem Endlosformkörper minimiert. Alternativ oder zusätzlich kann das Leitmittel auch eine besonders glatt ausgestaltete Oberfläche und/oder eine Anti-Haft-Beschichtung aufweisen. Das Leitmittel sowie die Fördereinrichtung können mit Bohrungen zum Ableiten der Koagulationsbadlösung und/oder mit Rillen zur Führung des Endlosformkörpers versehen sein. Das Leitblech kann in Richtung der Schwerkraft oder in Extrusionsrichtung direkt unterhalb der Extrusionsdüsenöffnung angeordnet sein.

Der Endlosformkörperkuchen auf der Fördereinrichtung kann in einer weiteren Ausgestaltung durch mehrere Zonen, beispielweise eine Einlaufzone, eine Entwässerungszone, eine Waschzone und eine Nachbehandlungszone gefördert werden. Diese Zonen können jeweils einzeln oder in beliebiger Kombination auch mehrfach hintereinander vorgesehen sein.

In der Einlaufzone wird der Endlosformkörperkuchen durch ein Koagulationsbad transportiert. Das Koagulationsbad befindet sich auf der Oberfläche der Fördereinrichtung und kann zumindest teilweise aus der Koagulationsbadlösung von der Koagulationsbadzufuhreinrichtung gebildet sein.

In der Waschzone wird ein Waschmedium dem Endlosformkörperkuchen auf der Fördereinrichtung zugeleitet. Dadurch kann der Endlosformkörperkuchen im Wesentlichen lösungsmittelfrei gewaschen werden. Besonders vorteilhaft ist es dabei, wenn das Waschmedium in der Waschzone im Gegenstrom, entgegengesetzt zur Förderrichtung des Endlosformkörperkuchens, strömt.

In der Entwässerungszone wird das Waschmedium und/oder die Koagulationsbadlösung aus der Fördereinrichtung abgeleitet. Die abgeleitete Koagulationsbadlösung und/oder das abgeleitete Waschmedium können jeweils wieder verwendet und dem Verfahren erneut zugeführt werden.

Im Anschluß an die Waschzone kann der Endlosformkörperkuchen auf die selbe Weise in einer Nachbehandlungszone nachbehandelt bzw. mit einer Fettauflage imprägniert werden.
Die Entwässerungszone kann zum Ableiten des Koagulationsbades oder des Waschmediums Perforationen aufweisen. Unterhalb der Perforationen können Auffangwannen angeordnet sein, die das abgeleitete Koagulationsbad und/oder das Waschmedium auffangen.

Vorzugsweise befindet sich bei einer Fördereinrichtung die Einlaufzone in Förderrichtung vor der Entwässerungszone und die Entwässerungszone vor der Waschzone Die Transportfläche kann in weiteren vorteilhaften Ausgestaltungen Einrichtungen zur Verbesserung des Transports des Endlosformkörperkuchens aufweisen. So können Begrenzungsmittel vorgesehen sein, die sich an den in Richtung quer zur Förderrichtung gelegenen Rändern der Transportfläche über die Transportfläche erheben und diese begrenzen. Die Begrenzungsmittel verhindern das Abfallen des Endlosformkörperkuchens von der Fördereinrichtung und ermöglichen eine gleichmäßige Längenausrichtung der abgelegten Endlosformkörper, welche im Anschluß nach dem Abzugswerk einer Schneidmaschine zur Herstellung von Stapelfasern zugeführt werden können.

Diese spezielle Ausgestaltung der Transportfläche wirkt sich positiv auf die gleichmäßige Schnittlänge der Stapelfaser aus.

Des Weiteren kann die Transportfläche Förderrinnen aufweisen, in denen der Endlosformkörperkuchen geführt und gefördert wird. Dies ist insbesondere dann von Vorteil, wenn eine Vielzahl von Endlosformkörpem gleichzeitig hergestellt wird.

Um ein leichtes Abziehen der Vielzahl von extrudierten Endlosformkörper am Ende der Fördereinrichtung durch das Abzugswerk zu ermöglichen, kann jeder Förderrinne eine Extrusionsdüse zugeordnet sein. Insbesondere kann für jede Extrusionsdüse eine einzige Förderrinne vorgesehen sein. Dadurch wird vermieden, dass sich im Spinnkuchen ein nicht mehr auflösbares Gewirr bildet.

Die Förderrinnen können einen im Wesentlichen rechteckigen oder einen im Wesentlichen V-förmigen Querschnitt aufweisen. Die Querschnittsgestaltung der Förderrinnen kann je nach Erfordernis auch andere Querschnittsformen aufweisen.

Im Folgenden wird das erfindungsgemäße Verfahren und die erfindungsgemäße Vorrichtung anhand von zwei Ausführungsbeispielen mit Bezug auf die Figuren beschrieben. Die Erfindung wird dabei exemplarisch zu einem Verfahren und einer Vorrichtung zur Herstellung von Spinnfäden erläutert. Die Erfindung ist jedoch nicht auf diese Anwendung beschränkt, vielmehr können auch Folien, Membranen, Hohlmembranen und Stapelfasern ohne Änderungen durch die Erfindung hergestellt werden, ohne dass besondere Anpassungen der Fördereinrichtung notwendig sind.

Es zeigen:
- Fig. 1: ein erstes Ausführungsbeispiel einer erfindungsgemäßen Vorrichtung zur Durchführung des erfindungsgemäßen Verfahrens;
- Fig. 1A: eine erste Variante des Ausführungsbeispiets der Fig. 1 in einem Schnitt entlang der Linie A-A der Fig. 1;
- Fig. 1B: eine zweite Variante des Ausführungsbeispiels der Fig. 1 in einem Schnitt entlang der Linie A-A der Fig. 1;
- Fig. 1C: eine zweite Variante des Ausführungsbeispiels der Fig.. 1 in einem Schnitt entlang der Linie A-A der Fig. 1;
- Fig. 2: ein zweites Ausführungsbeispiel der erfindungsgemäßen Vorrichtung zur Durchführung des erfindungsgemäßen Verfahrens.

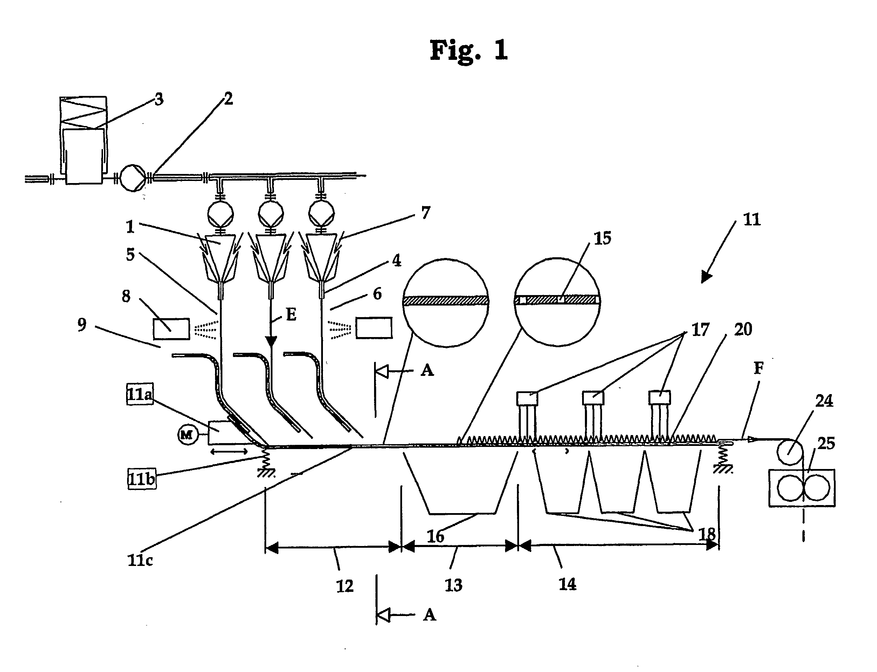

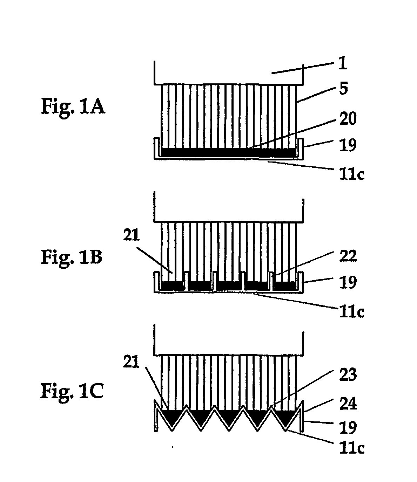

Das Ausführungsbeispiel der Fig. 1 zeigt eine Reihe von Köpfen 1 als Extrusionsköpfe, die über ein beheiztes Leitungssystem 2 mit einer zähflüssigen Extrusionslösung versorgt werden. Um eine kontinuierliche Versorgung der Spinnköpfe 1 zu gewährleisten, ist im Leitungssystem 2 ein Pufferbehälter 3 angeordnet, der Volumenstrom- und Druckschwankungen im Leitungssystem 2 vor den Extrusionsköpfen ausgleicht.

Als Extrusionslösung wird beim ersten Ausführungsbeispiel eine Spinnmasse aus 15 % Cellulose Typ MoDo Crown Dissolving - DP 510 bis 550, 75 % NMMO (N-Methyl-Morpholin-N-Oxid) und 10 % Wasser verwendet. Die Temperatur der Extrusionslösung im Leitungssystem 2 beträgt 100°C. Das Nullscherviskositätsniveau der Extrusionslösung gemäß dem ersten Ausführungsbeispiel beträgt 7900 Pas.

Jeder der Spinnköpfe 1 weist mindestens eine beheizte Spinnkapillare 4, vorzugsweise eine Vielzahl von Spinnkapillaren 4 in einreihiger Ausführung auf. Die Spinnkapillaren sind Röhrchen aus Chrom-Nickel-Stahl mit einem Innendurchmesser im Bereich von 250 µm und einer Länge von etwa 20 mm. Das Längen-Durchmesser-(L/D)Verhältnis beträgt um die 80. Es können auch Spinnkapillaren von wesentlich größerem UD-Verhältnis verwendet werden. Der Abstand der Mittelachsen der Spinnkapillaren eines Spinnkopfes beträgt ungefähr 1 mm.

Der Massendurchsatz pro Spinnkapillare beträgt in etwa 0,10 g pro Minute. Die Spinnkapillaren werden durch Heißwasser auf eine Temperatur um die 150°C geheizt.

Die Spinnkapillaren 4 enden in einer Extrusionsdüsenöffnung (ohne Bezugszeichen), aus der die Spinnmasse in Form eines Spinnfadens 5 als extrudierter Endlosformkörper austritt.

Die durch die Extrusionsdüsenöffnung extrudierten Endlosformkörper 5 passieren einen Luftspalt bzw. eine Gasstrecke 6. In der Gasstrecke 6 wird der Endlosformkörper 5 durch Luft 7 verstreckt, die aus dem Spinn- oder Extrusionskopf 1 parallel zur Fadenachse entlang des Endlosformkörpers 5 strömt. Die Geschwindigkeit der Luft 7 ist größer als die Extrusionsgeschwindigkeit des Spinnfadens. Bei einer Temperatur von etwa 30°C beträgt die relative Feuchte der Luft 7 etwa 70 %. Die Spinn- bzw. Extrusionsdüsenöffnung kann einen runden oder einen rechteckigen Querschnitt aufweisen.

Nach Passieren der Gasstrecke 6 wird der extrudierte und verstreckte Endlosformkörper durch eine Befeuchtungsvorrichtung 8 mit Koagulationsbadlösung besprüht. Die Befeuchtungsvorrichtung kann als Sprüh- bzw. Nebelkammer ausgebildet sein. Durch die Befeuchtungsvorrichtung wird gerade so viel Feuchtigkeit zugeführt, dass ein Verkleben der in Form eines Vorhangs aus der Vielzahl von Extrusionsdüsenöffnungen austretenden Endlosformkörper verhindert wird.

Nach dem Passieren der Befeuchtungsvorrichtung 9 trifft jeder Endlosformkörper 5 auf ein Leitmittel 9 auf, das in Extrusionsrichtung E direkt unterhalb der Extrusionsdüsenöffnung liegt. Das Leitmittel des Ausführungsbeispiels der Fig. 1 ist als ein Leitblech 9 ausgestaltet, das kontinuierlich mit einer Koagulationsbadlösung 10 versorgt wird, die in Extrusions- und Verstreckungsrichtung des Endlosformkörpers 5 an der Endlosformkörperzufuhreinrichtung unter Schwerkrafteinfluss herabfließt. Durch den Koagulationsbadfilm ist ein schonender Transport der auf das Leitblech 9 auflaufenden Endlosformkörper 5 möglich.

Sind, wie in Fig. 1 gezeigt, mehrere Reihen von Spinnköpfen 1 vorgesehen, so kann jeder dieser Reihen ein separates Leitmittel 9 zugeordnet sein.

An das Leitmittel 9 schließt sich in Förderrichtung des Endlosformkörpers eine Fördereinrichtung 11 an. Die Fördereinrichtung 11 ist als Schüttelfördereinrichtung ausgebildet und weist einen elektromechanischen Unwuchtantrieb 11a, elastische Lagerungen 11b und eine Transportfläche 11c auf. Beim Ausführungsbeispiel der Fig. 1 ist nur eine Fördereinrichtung 11 dargestellt Der Hub und die Frequenz des Antriebs 11a werden von einer Steuereinrichtung (nicht gezeigt) gesteuert und können von Hand oder automatisch an Verfahrensparameter wie die Beschaffenheit und Zusammensetzung des Extrudates, die Extrusionsgeschwindigkeit, die Abmessungen der Extrusionsdüse und die Temperaturen der Extrusionslösung angepasst werden.

Bei Bedarf kann eine beliebige Anzahl von Fördereinrichtungen 11 in Förderrichtung hintereinander geschaltet werden. Die Transportfläche 11c weist drei Bereiche 12, 13 und 14 auf. Ein in Förderrichtung gelegener erster Bereich 12 ist als Einlaufzone ausgestaltet, in dem sich die Koagulationsbadlösung 10 von der Endlosformkörperzufuhreinrichtung 9 sammelt und in Förderrichtung F weiter transportiert wird.

In dem sich an die Einlaufzone 12 in Förderrichtung anschließenden zweiten Bereich, einer Entwässerungszone 13, ist die Transportfläche 11c mit Perforationen 15 versehen. Die Entwässerungszone 13 ist noch dem Spinnbereich zuzuordnen und dient dazu, die beim Spinnprozess zugeführte Koagulationsbadlösung durch die Perforationen 15 aus der Fördereinrichtung 11 abzuleiten. Hierzu ist unterhalb der Perforationen 15 eine Auffangwanne 16 vorgesehen, in der sich die Koagulationsbadlösung ansammelt und erneut dem Leitmittel 9 und/oder der Einlaufzone 12 bzw. der Befeuchtungsvorrichtung 8 zugeführt wird.

In Förderrichtung F der Fördereinrichtung 11 schließt sich an die Entwässerungszone 13 der dritte Bereich 14, eine Waschzone, an. Die Waschzone 14 weist mindestens eine Waschvorrichtung 17 auf, die dem Endlosformkörper auf der Transportfläche der Fördereinrichtung 11 ein Waschmedium zuführt. Außerdem kann eine oder mehrere Waschvorrichtungen auch für die Aufbringung einer Fettauflage oder sonstiger Nachbehandlungs-, Vemetzungs- oder Bleichechemikalien auf die Endlosformkörper aufgebracht werden.

Durch das Waschmedium wird der Endlosformkörperkuchen lösungsmittelfrei gewaschen und beim Ausführungsbeispiel der Fig. 1 mit einer 10 g/l Avivage (50 % Leomin OR-50 % Leomin WG-stickstoffhaltiger Fettsäurepolyglykolester der Fa. Clariant GmbH) bei 45 °C ausgerüstet. Die Fettauflage wird zur besseren Faserweiterverarbeitung aufgebracht.

Im Bereich der Waschzone kann die Transportfläche ebenfalls perforiert sein.

Unterhalb der Perforationen der Transportfläche im Bereich der Waschzone 14 sind Auffangwannen 18, die der Waschvorrichtung zugeordnet sein können, angeordnet. In den Auffangwannen 18 wird das im Gegenstrom auf die Transportfläche 11 c geleitete Waschmedium aufgefangen und wieder den Waschvorrichtungen 17 zugeführt.

Die Transportfläche 11c ist beim Ausführungsbeispiel der Fig. 1 als eine im Wesentlichen horizontal ausgerichtete Fläche ausgestaltet. Die Oberfläche der Transportfläche ist, wie auch die Oberfläche des Fadenleitbleches 9 poliert und/oder beschichtet, um die Haftung des Endlosformkörpers auf der Oberfläche der Transportfläche zu minimieren.

Die Transportfläche erstreckt sich im Wesentlichen in horizontaler Richtung und wird durch den Unwuchtantrieb 11a in Förderrichtung oszillatorisch hin und her bewegt. Die Schwingung der Transportfläche 11c kann periodisch oder quasi-periodisch und sinusförmig oder sägezahnförmig sein.

In den Fig. 1A bis 1C ist eine Schnittansicht der Transportfläche 11c entlang der Linie A-A der Fig. 1 gezeigt.

In der Variante der Fig. 1A weist die Transportfläche 11c an ihren beiden senkrecht zur Förderrichtung gelegenen Rändern Begrenzungsmittel 19 auf, die sich über die Oberfläche der Transportfläche 11c erheben. Die Begrenzungsmittel 19 dienen zur Führung des Endlosformkörperkuchens 20 auf der Transportfläche 11c.

In der zweiten Variante gemäß Fig. 1B sind in der Transportfläche 11c zusätzlich zu den Begrenzungsmitteln 19 Förderrinnen 21 vorgesehen, die durch Stege 22 voneinander getrennt sind. Im Bereich oberhalb der Stege 22 befindet sich keine Extrusionsdüsenöffnung. Durch die Förderrinnen 21 wird der Spinnkuchen geführt und in einzelne Teile geteilt.

Wenn Rechteckdüsen verwendet werden, die in horizontaler Richtung quer zur Förderrichtung F des Endlosformkörperkuchens 20 ausgerichtet sind, ist es möglich, über den Stegen 22 keine Extrusionsdüsenöffnungen in Extrusions- und Verstreckungsrichtung vorzusehen.

In der dritten Variante gemäß Fig. 1C sind die Förderrinnen 21 V-förmig ausgebildet. Auch hier ist es vorgesehen, dass oberhalb des Trennbereichs 23 keine Extrusionsdüsenöffnung vorgesehen ist, so dass die Endlosformkörper 5 immer in einer Förderrinne 21 abgelegt werden.

Die Extrusionsdüsenöffnungen können sowohl quer zur Förderrichtung als auch in Förderrichtung des Endlosformkörperkuchens angeordnet sein.

Aufgrund der schwingenden Bewegung der Transportfläche 11c in Förderrichtung F wird jeder von der Endlosformkörperzufuhreinrichtung zugeführte Endlosformkörper 5 in geometrisch geordneten Lagen, beispielsweise in Form wellenförmig geschichteter Stapel, auf der Transportfläche 11c abgelegt.

Durch diese gefaltete bzw. wellige Auflage des Endlosformkörpers 5 ist es möglich, die Fördergeschwindigkeit der Fördereinrichtung 11 gegenüber der Extrusionsgeschwindigkeit des Endlosformkörpers stark zu reduzieren. Im Ausführungsbeispiel der Fig. 1 beträgt die Verarbeitungsgeschwindigkeit das 50- bis 150-fache der Fördergeschwindigkeit der Fördereinrichtung 11.

Am Ende der Fördereinrichtung 11 wird der wellig in Form eines Spinnkuchens 20 abgelegte Endlosformkörper durch ein Abzugswerk 24 entfaltet, abgezogen und wieder auf Extrusionsgeschwindigkeit beschleunigt.

Nachfolgend auf das Abzugswerk kann eine Schneidemaschine 25 vorgesehen sein. Durch die Schneidemaschine 25 werden die Endlösformkörper 7 zu Stapeln geschnitten und danach bei ca. 105°C getrocknet.

Die durch das Ausführungsbeispiel der Fig. 1 erzeugten Fasern weisen eine Feinheit von etwa 1,5 dtex und eine Stapellänge von etwa 40 mm auf.

Im Anschluss an das Trocknen wird die Faserfeuchtigkeit auf ca. 10 % eingestellt. Weitere Behandlungsmöglichkeiten des Endlosformkörpers wie Erzeugung eines verstärkten Fasercrimps sowie einer Filamenttrocknung können ebenso durchgeführt werden.

Ein zusätzlicher Bleichvorgang vor dem Trocknen wird beim Ausführungsbeispiel der Fig. 1 nicht durchgeführt.

Im Bereich der Transporifläche 11c können Pressvorrichtungen (nicht dargestellt) vorgesehen sein, die den Endlosformkörperkuchen abpressen bzw. entwässern.

Die durch die üblichen standardisierten Verfahren gemessenen textilen Eigenschaften der Endlosformkörper gemäß Ausführungsbeispiel der Fig. 1 waren wie folgt:

Die Reißkraft trocken beträgt um die 40 cN/tex, die Reißdehnung trocken beträgt ca. 13 %, die Schlingenreißfestigkeit beträgt mehr als 17 cN/tex und die Fibrillierungsnote ist 2.

Demzufolge sind die textilen Eigenschaften gegenüber dem Stand der Technik wesentlich verbessert.

Auf die Besprühung durch ein Koagulationsbadlösung durch die Befeuchtungsvorrichtungen 8 kann im Rahmen der vorliegenden Erfindung ohne größeren negativen Einfluss auf die textilen Eigenschaften auch verzichtet werden.

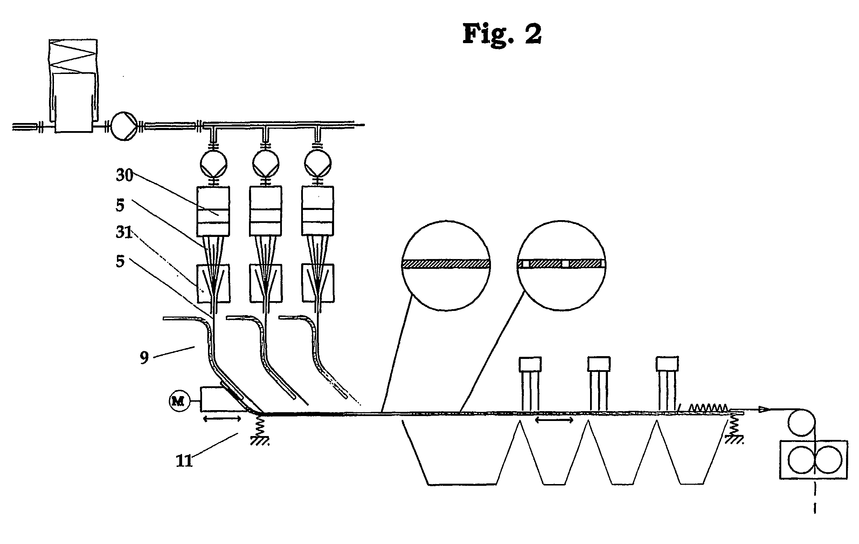

In der Fig. 2 ist ein zweites Ausführungsbeispiel der Erfindung dargestellt.

Im Folgenden wird dabei der Einfachheit halber nur auf die Unterschiede zum ersten Ausführungsbeispiel der Fig. 1 eingegangen.

Anstelle der beheizten Spinnkapillaren wird beim Ausführungsbeispiel der Fig. 2 eine Runddüse 30 mit Hütchen verwendet. Die Düse weist eine Lochzahl im Bereich um 8500 auf, wobei das Einzelkapillar einen Durchmesser von 100 µm hat. Der Außendurchmesser der Runddüse beträgt ca. 80 mm.

Jeder Endlosformkörper bzw. Spinnfaden 5 aus der Runddüse 30 passiert zunächst einen Luftspalt 6 und läuft danach direkt in einen Spinntrichter 31.

Der Spinntrichter 31 ist in einem Koagulationsbad angeordnet, wobei die Spinnbadzuführung so eingestellt wird, daß ein Teil der Spinnbadflüssigkeit immer an der Trichteroberkante überläuft.

Die aus dem Spinntrichter 31 austretenden Endlosformkörperbündel werden ohne weiteres Verziehen auf die Fördereinrichtung 11 aufgelegt, entsprechend dem Endlosformkörper gemäß Ausführungsbeispiel 1.

Somit besteht hinsichtlich der Funktion des Fördereinrichtung kein Unterschied zwischen einem einzelnen Spinnfaden und einem Spinnfadenbündel. Sowohl Spinnfaden als auch Spinnfadenbündel sind im Sinne der Erfindung Endlosformkörper.

Die Runddüsen 30 mitsamt den Spinntrichtem 31 können sowohl längs als auch quer zur Förderrichtung der Fördereinrichtung angeordnet sein. Insbesondere können Runddüsen und Spinntrichter 30, 31 rasterförmig angeordnet sein.

Die Spinngeschwindigkeit des Ausführungsbeispiels der Fig. 2 beträgt 30 m/min bei einem Titer von ca. 3,8 dtex.

Auch bei der Verwendung von Runddüsen werden die textilen Eigenschaften der Fasern gegenüber dem Stand der Technik verbessert. So beträgt die Reißkraft trocken mehr als 29 cN/tex bei einer Reißdehnung von ca. 15 % trocken. Die Schlingenreißfestigkeit beträgt um die 8,5 cN/tex bei einer Fibrillierungsnote von 1.

Bei beiden Ausführungsbeispielen wird durch die gegenüber der Extrusionsgeschwindigkeit und der Abzugsgeschwindigkeit herabgesenkte Fördergeschwindigkeit ein zugspannungsfreier Transport der Endlosformkörper als einzelne Endlosformkörper oder als Endlosformkörperbündel in einem Endlosformkörperkuchen erreicht.

Die durch die erfindungsgemäße Vorrichtung hergestellten Endlosformkörper können zur Herstellung von Verpackungs- und Fasermaterial, als Mischkomponenten zur Herstellung von Garnen, oder zur Herstellung von Vliesstoffen und Geweben verwendet werden.

Bei der Weiterverarbeitung der durch das erfindungsgemäße Verfahren und die erfindungsgemäße Vorrichtung hergestellten Endlosformkörper könne zusätzliche Komponenten wie Baumwolle, Lyocell, Rayon, Carbacell, Polyester, Polyamid, Celluloseacetat, Acrylat, Polypropylen oder Gemische davon mit bis zu 30 Gew.-% zugemischt werden.

## Patentansprüche

1. Verfahren zum Herstellen cellulosischer Formkörper, wie Filamente, Stapelfasern, Membranen und Folien, umfassend die folgenden Verfahrensschritte:
- Extrudieren einer Extrusionslösung enthaltend Wasser, Cellulose und tertiäres Aminoxid zu mindestens einem Endlosformkörper (5),
- Verstrecken des Endlosformkörpers (5) mittels einer in Extrusionsrichtung (E) geleiteten Fluidströmung, die den Endlosformkörper (5) umströmt,
- Aufnehmen des Endlosformkörpers (5) auf einer Fördereinrichtung (11),
- im Wesentlichen zugspannungsfreies Fördern des Endlosformkörpers auf der Fördereinrichtung zu einem Abzugswerk (24) bei gleichzeitigem Koagulieren und Verfestigen des Endlosformkörpers (5), und
- Abziehen des Endlosformkörpers von der Fördereinrichtung unter Zugspannung durch das Abzugswerk.

2. Verfahren nach Anspruch 1, bei dem der folgende Verfahrensschritt ausgeführt wird:
- Fördern des Endlosformkörpers (5) auf der Fördereinrichtung (11) mit einer Fördergeschwindigkeit, die kleiner als die Extrusionsgeschwindigkeit des Endlosformkörpers (5) ist.

3. Verfahren nach Anspruch 1 oder 2, bei dem der folgende Verfahrensschritt ausgeführt wird:
- Abziehen des Endlosformkörpers (5) durch das Abzugswerk (24) mit einer Abzugsgeschwindigkeit, die im wesentlichen der Extrusionsgeschwindigkeit des Endlosformkörpers (5) entspricht.

4. Verfahren nach einem der oben genannten Ansprüche bei dem der folgende Verfahrensschritt ausgeführt wird:
- Fördern des Endlosformkörpers (5) auf der Fördereinrichtung (11) mittels hin und her gehender Bewegung der Fördereinrichtung (11) vorzugsweise in Richtung der Förderrichtung (F).

5. Verfahren nach Anspruch 4, bei dem der folgende Verfahrensschritt ausgeführt wird:
- Steuern des Hubes und/oder der Frequenz der Bewegung der Fördereinrichtung (11) in Abhängigkeit von zumindest der Beschaffenheit des Endlosformkörpers (5) und der Extrusionsgeschwindigkeit.

6. Verfahren nach einem der oben genannten Ansprüche, bei dem der folgende Verfahrensschritt ausgeführt wird:
- Geordnetes Ablegen des Endlosformkörpers (5) als Endlosformkörperkuchen (20) auf der Fördereinrichtung (11).

7. Verfahren nach einem der oben genannten Ansprüche bei dem der folgende Verfahrensschritt ausgeführt wird:
- Zuführen des Endlosformkörpers (5) an die Fördereinrichtung (11) durch ein zumindest abschnittsweise stationäres Leitmittel.

8. Verfahren nach einem der oben genannten Ansprüche, bei dem der folgende Verfahrensschritt ausgeführt wird:
- Transport des Endlosformkörpers (5) durch das Leitmittel (9) in einem in Förderrichtung (F) fließenden Flüssigkeit, vorzugsweise bestehend aus einer Koagulationsbadlösung.

9. Verfahren nach einem der oben genannten Ansprüche, bei dem der folgende Verfahrensschritt ausgeführt wird:
- Fördern der Endlosformkörperkuchens auf der Fördereinrichtung (11) durch ein Koagulationsbad in einer sich an das Leitmittel (9) anschließenden Einlaufzone.

10. Verfahren nach einem der oben genannten Ansprüche, bei dem der folgende Verfahrensschritt ausgeführt wird:
- Fördern des Endlosformkörperkuchens auf der Fördereinrichtung (11) durch eine Entwässerungszone (13), in der die Koagulationsbadlösung aus der Fördereinrichtung (11) abgeleitet wird.

11. Verfahren nach einem der oben genannten Ansprüche, bei dem der folgende Verfahrensschritt ausgeführt wird:
- Fördern des Endlosformkörperkuchens auf der Fördereinrichtung (11) durch eine Waschzone, in der ein flüssiges Waschmedium der Fördereinrichtung (11) zugeleitet und der Endlosformkörper (5) im wesentlichen lösungsmittelfrei gewaschen wird.

12. Verfahren nach Anspruch 11, bei dem der folgende Verfahrensschritt ausgeführt wird:
- Zuleiten des Waschmediums in der Waschzone im Gegenstrom entgegengesetzt zur Förderrichtung (F).

13. Verfahren nach einem der oben genannten Ansprüche, bei dem der folgende Verfahrensschritt ausgeführt wird:
- Ableiten des Waschmediums in der Entwässerungszone.

14. Verfahren nach einem der oben genannten Ansprüche, bei dem der folgende Verfahrensschritt ausgeführt wird:
- Pressen des Endlosformkörpers (5) auf der Fördereinrichtung.

15. Verfahren nach einem der oben genannten Ansprüche, bei dem nach dem Verstrecken der folgende Verfahrensschritt ausgeführt wird:
- Durchleiten des Endlosformkörpers (5) durch eine Gasstrecke.

16. Verfahren nach einem der oben genannten Ansprüche, bei dem der folgende Verfahrensschritt ausgeführt wird:
- Besprühen des Endlosformkörpers (5) in der Gasstrecke (6) mit einer Koagulationsbadlösung.

17. Vorrichtung zur Herstellung cellulosischer Formkörper, wie Filamente, Stapelfasern, Membranen und Folien, mit mindestens einer Extrusionsdüsenöffnung, durch die im Betrieb eine Extrusionslösung aus Cellulose, Wasser und tertiärem Aminoxid austritt und zu einem Endlosformkörper (5) extrudiert wird, mit einem Abzugswerk (24), durch das der Endlosformkörper (5) unter Aufbringung einer Zugspannung abziehbar ist, und mit einer zwischen der Extrusionsdüsenöffnung und dem Abzugswerk vorgesehene eine Fördereinrichtung (11), durch die der Endlosformkörper (5) im Betrieb im Wesentlichen zugspannungsfrei zur Abzugsvorrichtung förderbar ist, wobei zwischen der Extrusionsdüsenöffnung und der Fördereinrichtung der Endlosformkörper durch eine in Extrusionsrichtung (E) geleitete Fluidströmung umströmt und mittels dieser verstreckt ist.

18. Vorrichtung nach Anspruch 17, wobei die Fördereinrichtung (11) als Schüttelförderer ausgebildet ist, der im Betrieb im wesentlichen in Förderrichtung (F) hin und her beweglich angetrieben ist.

19. Vorrichtung nach Anspruch 17 oder 18, wobei die Vorrichtung eine mit der Fördereinrichtung (11) verbundene Steuereinrichtung aufweist, durch die der Hub und/oder die Frequenz der Bewegung der Fördereinrichtung (11) einstellbar sind.

20. Vorrichtung nach einem der Ansprüche 17 bis 19, wobei die Fördereinrichtung (11) eine Transportfläche (11c) zur Aufnahme und zum Weitertransport des Endlosformkörpers (5) aufweist.

21. Vorrichtung nach Anspruch 20, wobei die Transportfläche (11c) nach oben gerichtet ist und im wesentlichen in Richtung der Schwerkraft oder in Extrusionsrichtung (E) unterhalb der Extrusionsdüsenöffnung angeordnet ist.

22. Vorrichtung nach Anspruch 20 oder 21, wobei der Endlosformkörper (5) im wesentlichen geordnet als Endlosformkörperkuchen (20) auf der Transportfläche (11c) aufliegt.

23. Vorrichtung nach einem der Ansprüche 20 bis 23, wobei die Transportfläche (11c) mit mindestens einer sich in Förderrichtung (F) erstreckenden Förderrinne (21) versehen ist.

24. Vorrichtung nach Anspruch 23, wobei bei einer Vielzahl von Förderrinnen und Extrusionsdüsenöffnungen jede Förderrinne (21) einer Extrusionsdüsenöffnung zugeordnet ist.

25. Vorrichtung nach Anspruch 23 oder 24, wobei bei einer Vielzahl von Extrusionsdüsenöffnungen und Förderrinnen jeder Extrusionsdüse genau eine Förderrinne (21) zugeordnet ist.

26. Vorrichtung nach einem der Ansprüche 23 bis 25, wobei die Förderrinne (21) einen im wesentlichen V-förmigen oder rechteckigen Querschnitt aufweist.

27. Vorrichtung nach einem der Ansprüche 20 bis 26, wbei die Transportfläche (11c) in Richtung quer zur Förderrichtung (F) mit sich über die Transportfläche (11c) erhebenden Begrenzungsmitteln versehen ist.

28. Vorrichtung nach Anspruch 27, wobei das Begrenzungsmittel (19) zumindest abschnittsweise perforiert ist.

29. Vorrichtung nach einem der Ansprüche 17 bis 28, wobei die Fördereinrichtung (11) einen als Einlaufzone (13) ausgestalteten Bereich aufweist, in dem auf den Endlosformkörper (5) ein Koagulationsbad einwirkt.

30. Vorrichtung nach einem der Ansprüche 17 bis 29, wobei die Transportfläche (11c) einen als Waschzone ausgestalteten Bereich aufweist, in dem eine Waschvorrichtung angeordnet ist, durch die der Waschzone ein Waschmedium zuführbar ist.

31. Vorrichtung nach einem der Ansprüche 17 bis 30, wobei die Transportfläche (11c) einen als Entwässerungszone (13) ausgestalteten Bereich aufweist, der mit Perforationen zum Ableiten des Koagulationsbades oder des Waschmediums aus der Fördereinrichtung (11) ausgebildet ist.

32. Vorrichtung nach einem der Ansprüche 17 bis 31. wobei in Förderrichtung (F) des Endlosformkörpers (5) vor, vorzugsweise unmittelbar vor, der Fördereinrichtung (11) ein gegenüber dem Extrusionskopf (1) im wesentlichen unbewegliches Leitmittel (9) vorgesehen ist, auf die der Endlosformkörper (5) auftrifft und durch die er auf die bewegliche Fördereinrichtung (11) geleitet ist.

33. Vorrichtung nach Anspruch 32, wobei die Endlosformkörperzuleitungseinrichtung einen in Förderrichtung (F) strömenden Koagulationsbadfilm aufweist, in dem der Endlosformkörper (5) geführt ist.

34. Vorrichtung nach einem der Ansprüche 17 bis 33, wobei zwischen der Extrusionsdüsenöffnung und der Fördereinrichtung (11) eine Gasstrecke (6) angeordnet ist, in welcher eine Fluidströmung sich befindet.

35. Vorrichtung nach einem der Ansprüche 17 bis 34, wobei zwischen der Extrusionsdüsenöffnung und der Fördereinrichtung (11) eine Befeuchtungseinrichtung vorgesehen ist, durch die im Betrieb der Endlosformkörper (5) mit einem Koagulationsbad benetzbar ist.

36. Vorrichtung nach einem der Ansprüche 17 bis 35, wobei die Fördereinrichtung (11) mit einer Pressvorrichtung versehen ist, durch die der Endlosformkörper (5) auf der Transportfläche (11c) gepresst ist.

## Claims

1. Method for the manufacture of cellulose moldings such as filaments, staple fibers, membranes and films comprising the following method steps:
- extruding an extrusion solution containing water, cellulose and tertiary amine oxide into at least one continuous molding,
- stretching the continuous molding (5) by means of a fluid flow conducted in the extrusion direction (E), said flow flowing around the continuous molding (5),
- taking up the continuous molding (5) on a conveyor device (11),
- conveying the continuous molding (5) essentially without tensile stress on the conveyor device (11) to a draw-off unit (24) concomitant to simultaneous coagulation and solidification of the continuous molding (5), and
- pulling off the continuous molding (5) from the conveyor device (11) with tensile stress exerted by the draw-off unit.

2. Method according to claim 1 in which the following method step is carried out:
- conveying the continuous molding (5) on the conveyor device (11) with a transport speed which is lower than the extrusion speed of the continuous molding (5).

3. Method according to claim 1 or 2 in which the following method step is carried out:
- drawing off the continuous molding (5) by the draw-off unit (24) with a draw-off speed which essentially corresponds to the extrusion speed of the continuous molding (5).

4. Method according to any one of the above-mentioned claims in which the following method step is carried out:
- conveying of the continuous molding (5) on the conveyor device (11) by means of oscillating movement of the conveyor device (11) preferably in the direction of transport (F).

5. Method according to claim 4 in which the following method step is carried out:
- controlling the amplitude and/or frequency of the movement of the conveyor device (11) as a function of at least the constitution of the continuous molding (5) and the extrusion speed.

6. Method according to any one of the above-mentioned claims in which the following method step is carried out:
- orderly depositing of the continuous molding (5) as a continuous molding cake (20) on the conveyor device (11).

7. Method according to any one of the above-mentioned claims in which the following method step is carried out:
- supplying the continuous molding (5) to the conveyor device (11) by a guide device which is at least partially stationary.

8. Method according to any one of the above-mentioned claims in which the following method step is carried out:
- transporting the continuous molding (5) by means of the guide device (9) in a liquid flowing in the direction of transport (F), preferably consisting of a coagulation bath solution.

9. Method according to any one of the above-mentioned claims in which the following method step is carried out:
- conveying the continuous molding cake on the conveyor device (11) through a coagulation bath in an infeed zone following the guide device (9).

10. Method according to any one of the above-mentioned claims in which the following method step is carried out:
- conveying the continuous molding cake on the conveyor device (11) through a drainage zone (13) in which the coagulation bath solution is drained off from the conveyor device (11).

11. Method according to any one of the above-mentioned claims in which the following method step is carried out:
- conveying the continuous molding cake on the conveyor device (11) through a washing zone in which a liquid washing medium is supplied to the conveyor device (11) and the continuous molding (5) is washed essentially without solvents.

12. Method according to claim 11 in which the following method step is carried out:
- supplying the washing medium in the washing zone in a counter-flow in the direction opposite to the direction of transport (F).

13. Method according to any one of the above-mentioned claims in which the following method step is carried out:
- draining the washing medium in the washing zone.

14. Method according to any one of the above-mentioned claims in which the following method step is carried out:
- pressing the continuous molding (5) on the conveyor device.

15. Method according to any one of the above-mentioned claims in which the following method step is carried out after stretching:
- transporting the continuous molding (5) through a gas section.

16. Method according to any one of the above-mentioned claims in which the following method step is carried out:
- spraying the continuous molding (5) in the gas section (6) with a coagulation bath solution.

17. Device for the manufacture of cellulose moldings such as filaments, staple fibers, membranes and films with at least one extrusion die opening through which during operation an extrusion solution comprising cellulose, water and tertiary amine oxide emerges and is extruded into a continuous molding (5), with a draw-off unit (24) through which the continuous molding (5) can be drawn off with the application of tensile stress, and with a conveyor device (11), which is provided between the extrusion die opening and the draw-off unit (24) and by which the continuous molding (5) in operation can be conveyed to the draw-off unit (24) essentially without tensile stress, wherein between the extrusion die opening and the conveyor device (11) the continuous molding (5) is flown around and drawn by a fluid flow conducted in the extrusion direction (E).

18. Device according to claim 17, wherein the conveyor device (11) is made as a vibrating conveyor which, in operation is driven reciprocatingly essentially in the direction of transport (F).

19. Device according to claim 17 or 18, wherein the device has a control device connected with the conveyor device (11) through which the lift and/or frequency of the movement of the conveyor device (11) can be set.

20. Device according to any one of claims 17 to 19, wherein the conveyor device (11) has a transport surface (11c) to take up and further transport the continuous molding (5).

21. Device according to claim 20, wherein the transport surface (11c) is directed upwards and is located essentially underneath the extrusion die opening in the direction of gravity or in the direction of the extrusion (E).

22. Device according to claim 20 or 21, wherein the continuous molding (5) lies in an essentially orderly manner on the transport surface (11c) as a continuous molding cake (20).

23. Device according to any one of claims 20 to 22, wherein the transport surface (11c) is provided with at least one conveyor groove (21) running in the direction of transport (F).

24. Device according to claim 23, wherein, if there is a plurality of conveyor grooves and extrusion die openings, each conveyor groove (21) is assigned to one extrusion die opening.

25. Device according to claim 23 or 24, wherein, if there is a plurality of extrusion die openings and conveyor grooves, exactly one conveyor groove (21) is assigned to each extrusion die.

26. Device according to any one of claims 23 to 25, wherein the conveyor groove (21) has an essentially V-shaped or rectangular cross-section.

27. Device according to any one of the claims 20 to 26, wherein the transport surface (11c) is provided in the direction transverse to the direction of transport (F) with limiting devices rising above the transport surface (11c).

28. Device according to claim 27, wherein the limiting device (19) is perforated at least in sections.

29. Device according to one of claims 17 to 28, wherein the conveyor device (11) has an area configured as an infeed zone (13) in which the continuous molding (5) is affected by a coagulation bath.

30. Device according to one of claims 17 to 29, wherein the transport surface (11c) has an area configured as a washing zone in which a washing device is positioned through which a washing medium can be supplied to the washing zone.

31. Device according to any one of claims 17 to 30, wherein the transport surface (11c) is provided with an area configured as a drainage zone (13) having perforations to drain off the coagulation bath or the washing medium from the conveyor device (11).

32. Device according to any one of claims 17 to 31, wherein in the direction of transport (F) of the continuous molding (5), preferably immediately in front of the conveyor device (11) a guide device (9) which is essentially unmoving in respect of the extrusion head (1) is provided which is impacted by the continuous molding (5) and through which it is guided towards the moving conveyor device (11).

33. Device according to claim 32, wherein the continuous molding supply device has a coagulation bath film flowing in the direction of transport (F) in which the continuous molding (5) is guided.

34. Device according to any one of claims 17 to 33, wherein between the extrusion die opening and the conveyor device (11) a gas section (6) is located in which there is a fluid flow.

35. Device according to any one of claims 17 to 34, wherein between the extrusion die opening and the conveyor device (11) a sprinkler device is provided through which in operation the continuous molding (5) can be sprinkled with a coagulation bath.

36. Device according to any one of claims 17 to 35, wherein the conveyor device (11) is provided with a pressing device through which the continuous molding (5) is pressed on the transport surface (11c).

## Revendications

1. Procédé pour fabriquer des corps moulés en cellulose tels que des filaments, des fibres discontinues, des membranes et des films, comprenant les étapes suivantes :
- extrusion d'une solution d'extrusion contenant de l'eau, de la cellulose et d'oxyde d'amine tertiaire pour former au moins un corps moulé continu (5),
- étirage du corps moule continu (5) à l'aide d'un courant de fluide qui est amené dans le sens d'extrusion (E) et qui entoure le corps moulé (5),
- réception du corps moulé continu (5) sur un convoyeur (11),
- acheminement essentiellement sans contrainte de traction du corps moulé continu sur le convoyeur, jusqu'à un dispositif d'enlèvement (24), avec une coagulation et une consolidation simultanées du corps moulé continu (5), et
- enlèvement du corps moulé continu du convoyeur, avec une contrainte de traction, par le dispositif d'enlèvement.

2. Procède selon la revendication 1, selon lequel l'étape suivante est réalisée :
- acheminement du corps moulé continu (5) sur le convoyeur (11 ) à une vitesse d'acheminement qui est inférieure à la vitesse d'extrusion dudit corps moulé (5).

3. Procède selon la revendication 1 ou 2, selon lequel l'étape suivante est réalisée :
- enlèvement du corps moulé continu (5) par le dispositif d'enlèvement (24) à une vitesse d'enlèvement qui correspond essentiellement à la vitesse d'extrusion dudit corps moulé (5).

4. Procédé selon l'une des revendications précédentes, selon lequel l'étape suivante est réalisée :
- acheminement du corps moulé continu (5) sur le convoyeur (11) par un mouvement alternatif de celui-ci, de préférence dans le sens d'acheminement (F).

5. Procédé selon la revendication 4, selon lequel l'étape suivante est réalisée :
- commande de l'amplitude et/ou de la fréquence du mouvement du convoyeur (11) en fonction, au moins, de la nature du corps moulé continu (5) et de la vitesse d'extrusion.

6. Procédé selon l'une des revendications précédentes, selon lequel l'étape suivante est réalisée :
- dépôt ordonné du corps moulé continu (5) sur le convoyeur (11) sous la forme d'un gâteau de corps moulé (20).

7. Procédé selon l'une des revendications précédentes, selon lequel l'étape suivante est réalisée :
- amenée du corps moulé continu (5) sur le convoyeur (11) par un moyen de guidage qui est stationnaire au moins par sections.

8. Procédé selon l'une des revendications précédentes, selon lequel l'étape suivante est réalisée :
- transport du corps moulé continu (5) par le moyen de guidage (9) dans un liquide qui coule dans le sens d'acheminement (F) et qui est composé de préférence d'une solution de bain de coagulation.

9. Procédé selon l'une des revendications précédentes, selon lequel l'étape suivante est réalisée :
- acheminement du gâteau de corps moulé continu sur le convoyeur (11) à travers un bain de coagulation dans une zone d'entrée qui fait suite au moyen de guidage (9).

10. Procédé selon l'une des revendications précédentes, selon lequel l'étape suivante est réalisée :
- acheminement du gâteau de corps moulé continu sur le convoyeur (11) à travers une zone d'assèchement (13) dans laquelle le bain de coagulation est évacué du convoyeur (11).

11. Procédé selon l'une des revendications précédentes, selon lequel l'étape suivante est réalisée :
- acheminement du gâteau de corps moulé continu sur le convoyeur (11) à travers une zone de lavage dans laquelle un produit de laquelle un produit de lavage liquide est amené sur le convoyeur (11 ) et le corps moulé continu (5) est lavé essentiellement sans solvants.

12. Procédé selon la revendication 11, selon lequel l'étape suivante est réalisée :
- amenée du produit de lavage dans la zone de lavage à contre-courant par rapport au sens d'acheminement (F).

13. Procédé selon l'une des revendications précédentes, selon lequel l'étape suivante est réalisée :
- évacuation du produit de lavage dans la zone de lavage.

14. Procédé selon l'une des revendications précédentes, selon lequel l'étape suivante est réalisée :
- pressage du corps moulé continu (5) sur le convoyeur.

15. Procédé selon l'une des revendications précédentes, selon lequel après l'étirage, l'étape suivante est réalisée :
- transport du corps moulé continu (5) à travers une section gazeuse.

16. Procédé selon l'une des revendications précédentes, selon lequel l'étape suivante est réalisée :
- vaporisation du corps moulé continu (5) dans la section gazeuse (6) avec un bain de coagulation.

17. Dispositif pour fabriquer des corps moulés en cellulose tels que des filaments, des fibres discontinues, des membranes et des films, comprenant au moins une ouverture formant filière d'extrusion par laquelle une solution d'extrusion composée de cellulose, d'eau et d'oxyde d'amine tertiaire sort, en fonctionnement, et est extrudée pour former un corps moulé continu (5), un dispositif d'enlèvement (24) par lequel ledit corps moulé continu (5) peut être enlevé, avec l'application d'une contrainte de traction, et un convoyeur (11) qui est prévu entre l'ouverture formant filière d'extrusion et le dispositif d'enlèvement (24) et par lequel le corps moulé continu (5), en fonctionnement, peut être acheminé essentiellement sans contrainte de traction jusqu'au dispositif d'enlèvement (24), étant précisé qu'entre l'ouverture formant filière d'extrusion et le convoyeur (11), le corps moulé continu (5) est entouré par un courant de fluide guidé dans le sens d'extrusion (E), et est étiré à l'aide de ce courant.

18. Dispositif selon la revendication 17, dans lequel le convoyeur (11) est conçu comme un convoyeur vibrant qui est entraîné, en fonctionnement, suivant un mouvement alternatif essentiellement dans le sens d'acheminement (F).

19. Dispositif selon la revendication 17 ou 18, comportant un dispositif de commande qui est relié au convoyeur (11) et par lequel la course et/ou la fréquence du mouvement du convoyeur (11) sont réglables.

20. Dispositif selon l'une des revendications 17 à 19, dans lequel le convoyeur (11) présente une surface de transport (11c) destinée à recevoir et à acheminer le corps moulé continu (5).

21. Dispositif selon la revendication 20, dans lequel la surface de transport (11c) est dirigée vers le haut et est disposée essentiellement au-dessous de l'ouverture formant filière d'extrusion, dans le sens de la force de gravité ou dans le sens d'extrusion (E),

22. Dispositif selon la revendication 20 ou 21, dans lequel le corps moulé continu (5) est posé sous la forme d'un gâteau de corps moulé continu (20), essentiellement ordonné, sur la surface de transport (11c).

23. Dispositif selon l'une des revendications 20 à 22, dans lequel la surface de transport (11 c) est pourvue d'au moins une gouttière d'acheminement (21 ) qui s'étend dans le sens d'acheminement (F).

24. Dispositif selon la revendication 23, dans lequel, s'il y a plusieurs gouttières d'acheminement et plusieurs ouvertures formant filières d'extrusion, chaque gouttière d'acheminement (21) est associée à une ouverture formant filière d'extrusion.

25. Dispositif selon la revendication 23 ou 24, dans lequel, s'il y a plusieurs ouvertures formant filières d'extrusion et plusieurs gouttières d'acheminement, exactement une gouttière d'acheminement (21) est associée à chaque ouverture formant filières d'extrusion.

26. Dispositif selon l'une des revendications 23 à 25, dans lequel la gouttière d'acheminement (21) présente une section transversale sensiblement en V ou rectangulaire.

27. Dispositif selon l'une des revendications 20 à 26, dans lequel la surface de transport (11 c) est pourvue, dans un sens transversal par rapport au sens d'acheminement (F), de moyens de limitation qui se dressent sur la surface de transport (11c).

28. Dispositif selon la revendication 27, dans lequel le moyen de limitation (19), au moins par sections, est perforé.

29. Dispositif selon l'une des revendications 17 a 28, dans lequel le convoyeur (11) comporte une partie conçue comme une zone d'entrée (13) dans laquelle un bain de coagulation agit sur le corps moulé continu (5).

30. Dispositif selon l'une des revendications 17 à 29, dans lequel la surface de transport (11c) comporte une partie conçue comme une zone de lavage dans laquelle est disposé un dispositif de lavage par lequel un produit de lavage peut être amené dans ladite zone de lavage.

31. Dispositif selon l'une des revendications 17 à 30, dans lequel la surface de transport (11c) comporte une partie conçue comme une zone d'assèchement (13) qui est pourvue de perforations pour évacuer du convoyeur (11) le bain de coagulation ou le produit de lavage.

32. Dispositif selon l'une des revendications 17 à 31, dans lequel il est prévu avant le convoyeur (11), de préférence juste avant, dans le sens d'acheminement (F) du corps moulé continu (5), un moyen de guidage (9) qui est essentiellement fixe par rapport à la tête d'extrusion (1), sur lequel arrive le corps moulé continu (5) et par lequel celui-ci est amené sur le convoyeur (11) mobile.

33. Dispositif selon la revendication 32, dans lequel le dispositif d'amenée de corps moulé continu comporte un bain de coagulation en forme de film qui s'écoule dans le sens d'acheminement (F) et dans lequel passe le corps moulé continu (5)

34. Dispositif selon l'une des revendications 17 à 33, dans lequel il est prévu, entre l'ouverture formant filières d'extrusion et le convoyeur (11), une section gazeuse (6) dans laquelle se trouve un courant de fluide.

35. Dispositif selon l'une des revendications 17 à 34, dans lequel il est prévu, entre l'ouverture formant filières d'extrusion et le convoyeur (11), un dispositif d'humidification par lequel, en fonctionnement, le corps moulé continu (5) peut être humecté avec un bain de coagulation.

36. Dispositif selon l'une des revendications 17 à 35, dans lequel le convoyeur (11) est pourvu d'un dispositif de pression par lequel le corps moulé continu (5) est pressé sur la surface de transport (11 c).
